# EUROPÄISCHE PATENTSCHRIFT

(11) **EP 3 913 256 B1**
(45) Veröffentlichungstag und Bekanntmachung des Hinweises auf die Patenterteilung: **28.12.2022**
(21) Anmeldenummer: 21174800.9
(22) Anmeldetag: 19.05.2021
(51) Int. Cl.: F16H 7/08

(54) **SPANNVORRICHTUNG FÜR EIN RIEMEN- ODER KETTENGETRIEBE**
TENSIONING DEVICE FOR A BELT OR CHAIN TRANSMISSION
DISPOSITIF DE SERRAGE POUR UNE COURROIE OU UNE CHAINE D'ENTRAÎNEMENT

(30) Priorität: 19.05.2020 DE 102020113511
(43) Veröffentlichungstag der Anmeldung: 24.11.2021
(73) Patentinhaber: Grimme Landmaschinenfabrik GmbH & Co. KG, 49401 Damme (DE)
(72) Erfinder: Dr. Heilig, Ansgar, 49593 Bersenbrück (DE); Sander, Malte, 49419 Wagenfeld (DE)
(74) Vertreter: Wischmeyer, André

(56) Entgegenhaltungen:
- DE-A1-102006 033 125
- DE-B3-102017 121 168
- US-A- 2 639 623
- US-A- 5 026 326

## Beschreibung

Die Erfindung betrifft eine Spannvorrichtung für ein Riemen- oder Kettengetriebe. Die Spannvorrichtung umfasst zumindest ein erstes Schwenkelement. An dem ersten Schwenkelement ist ein erstes Spannelement drehbar um eine erste Spanndrehachse gelagert, welche relativ zum ersten Schwenkelement insbesondere unbeweglich ist. Die Spannvorrichtung umfasst außerdem zumindest ein zweites Schwenkelement. Am zweiten Schwenkelement ist ein zweites Spannelement drehbar um eine zweite Spanndrehachse gelagert, die zum zweiten Schwenkelement insbesondere unbeweglich ist. Das zweite Schwenkelement ist im Betrieb mit dem ersten Schwenkelement derart beweglich gekoppelt, dass das erste Schwenkelement und das zweite Schwenkelement relativ zueinander zumindest schwenkbeweglich um zumindest eine Schwenkachse sind. Die Spannvorrichtung umfasst außerdem zumindest ein Rückstellelement. Das Rückstellelement ist zur Ausbildung eines zumindest anteilig um die Schwenkachse wirkenden Spanndrehmomentes ausgebildet und zwischen dem ersten Schwenkelement und dem zweiten Schwenkelement angeordnet.

Eine Spannvorrichtung ist etwa aus der DE 198 49 886 A1 bekannt. Sie dient zu einer Spannung des Riemens bzw. der Kette unabhängig von dessen bzw. deren Umlaufrichtung. Das durch das Rückstellelement ausgebildete Spanndrehmoment verursacht, dass die Spannelemente gegen den Riemen gedrückt werden und diesen somit spannen. Weitere Spannvorrichtungen sind aus der US 2 639 623 A, der DE 10 2006 033 125 A1, der DE 10 2017 121 168 B3 und der US 5 026 326 A bekannt. Nachteilig an den bekannten Spannvorrichtungen ist, dass diese bei sich ändernden Betriebsbedingungen des Getriebes regelmäßig entweder durch eine zu geringe Spannung einen zu großen Schlupf zulässt und somit keine zuverlässige Kraftübertragung mehr ermöglicht oder den Wirkungsgrad des Getriebes durch eine zu große Spannung deutlich mindert.

Aufgabe der vorliegenden Erfindung ist die Bereitstellung einer Spannvorrichtung sowie eines Getriebes mit der Spannvorrichtung und einer Hackfruchterntemaschine mit der Spannvorrichtung, die flexibler einsetzbar ist und zuverlässig eine effiziente Kraftübertragung ermöglicht.

Erfindungsgemäß wird die Aufgabe mit einer Spannvorrichtung mit den Merkmalen des Anspruchs 1 und mit einer Hackfruchterntemaschine mit den Merkmalen des Anspruchs 13 gelöst. Durch die Einstelleinrichtung lässt sich insbesondere je nach Betriebsfall der Spannvorrichtung das Spanndrehmoment automatisch und/oder manuell erhöhen oder verringern. Die Einstelleinrichtung ist bevorzugt zu einer Einstellung des Spanndrehmomentes außer Betrieb des Getriebes und/oder während des Betriebes des Getriebes ausgebildet. Durch die Einstelleinrichtung ist die Spannvorrichtung bei unterschiedlichen Getrieben und unterschiedlichen vom Getriebe zu übertragenden Leistungen derart angepasst einsetzbar, dass jedenfalls eine optimale Riemen- bzw. Kettenspannung erreicht wird. Dadurch hat die Spannvorrichtung ein weitreichendes Anwendungsgebiet und stellt jedenfalls einen hohen Wirkungsgrad des Getriebes und eine zuverlässige Leistungsübertragung sicher.

Im Betrieb ist die Spannvorrichtung insbesondere an einem Maschinenrahmen abgestützt, an dem auch Umlenkelemente des Riemen- oder Kettengetriebes gelagert sind, die den Riemen bzw. die Kette führen. Die Spannelemente sind insbesondere als Spannräder oder Spannrollen, mit Zähnen oder entlang ihres Umfangs glatt ausgebildet. Die Spannelemente lenken den Riemen bzw. die Kette im Betrieb bevorzugt zumindest auch geringfügig um. Die Spannelemente sind zu einem Kraft- oder formschlüssigen anliegen an bzw. Abrollen auf dem Riemen bzw. der Kette ausgebildet. Dabei handelt es sich insbesondere um einen Keilriemen, einen Flachriemen oder eine Rollenkette. Die Spannelemente sind an dem jeweiligen Schwenkelement insbesondere über ein Gleitlager oder ein Kugel- bzw. Rollenlager gelagert.

Die Schwenkelemente erstrecken sich insbesondere länglich zumindest von der bzw. einer Schwenkachse bis zum jeweiligen Spannelement. Die Schwenkelemente sind unmittelbar oder mittelbar miteinander gekoppelt und vorzugsweise jeweils über ein Schwenklager schwenkbar relativ zum Maschinenrahmen gelagert.

Die Spannvorrichtung umfasst insbesondere genau ein oder genau zwei Rückstellelemente, das bzw. die in einer Umlaufrichtung des Riemens bzw. der Kette betrachtet bevorzugt seitlich davon an den Schwenkelementen angeordnet ist bzw. sind. Die Spannvorrichtung ist insbesondere frei von weiteren Rückstellelementen, insbesondere von solchen, die ortsfest am Maschinenrahmen angeordnet sind. Das zumindest eine Rückstellelement ist bevorzugt als mechanische Zugfeder ausgebildet. Alternativ ist das Rückstellelement vorzugsweise als Fluiddruckfeder, insbesondere als Luft- oder Öldruckfeder, ausgebildet, die ein variables Innenvolumen für Fluid haben. Das Rückstellelement ist insbesondere an beiden Schwenkelementen beabstandet von der Schwenkachse angeordnet, um das Spanndrehmoment auszubilden.

Die Spannvorrichtung ist insbesondere zur Spannung von unterschiedlichsten Riemen bzw. Ketten in unterschiedlichsten Getrieben ausgebildet. Solche Getriebe sind insbesondere zu einer Über- und/oder Untersetzung ausgebildet oder frei von einer Über- oder Untersetzung. Im Betrieb liegen die Spannelemente bevorzugt an je einem Trum des Riemens bzw. der Kette vorzugsweise von außen an. Durch das Spanndrehmoment üben die Spannelemente eine Kraft auf den Riemen bzw. die Kette aus.

Erfindungsgemäß ist die Einstelleinrichtung von zumindest einem der Schwenkelemente umfasst und zur variablen Anordnung des Rückstellelementes am jeweiligen Schwenkelement ausgebildet. Dadurch sind für die Spannvorrichtung auch konventionelle Rückstellelemente einsetzbar, deren Federkonstante insbesondere nicht variabel ist. Hierdurch wird das Ausfallrisiko der Spannvorrichtung reduziert.

Durch eine bevorzugte Ausbildung der Einstelleinrichtung zu einer variablen Anordnung des Rückstellelementes an einem der Schwenkelemente ist ermöglicht, den Hebelarm zur Schwenkachse, mit dem das Rückstellelement auf das jeweilige Schwenkelement einwirkt, und/oder die Dehnung des Rückstellelementes in seine Zugrichtung zu vergrößern oder zu verkleinern. Hierdurch lässt sich das Spanndrehmoment auf einfache Weise variieren.

Erfindungsgemäß weist die Einstelleinrichtung eine Mehrzahl von Positionierhilfen zur Positionierung des Rückstellelementes auf. Bevorzugt weist die Einstelleinrichtung zumindest drei besonders bevorzugt zumindest sechs Positionierhilfen auf. Die Positionierhilfen sind erfindungsgemäß in eine Einstellrichtung voneinander beabstandet. Die Positionierhilfen sind vorzugsweise als Verbindungselemente und/oder als Bohrungen, Ösen, Rastnasen, Haken, Stifte oder ähnliches ausgebildet, mit denen das Rückstellelement einfach gekoppelt und von denen das Rückstellelement einfach entkoppelt werden kann. Durch die Positionierhilfen ist die vorgeschriebene Variation des durch ein konventionelles Rückstellelement ausgebildeten Spanndrehmomentes auf einfache und schnelle Weise möglich.

In einer Seitenansicht wird die Einstellrichtung insbesondere durch zur Schwenkachse bevorzugt parallele Mittelachsen der Positionierhilfen definiert. Dabei ist zumindest ein Teil der Mittelachsen, sind insbesondere die Mittelachsen sämtlicher Positionierhilfen der Einstelleinrichtung entlang einer Geraden verteilt. Durch diese Ausbildung lässt sich das Spanndrehmoment in definierten Schritten einfach verändern.

In einer vorteilhaften Ausgestaltung der Erfindung weist die Einstelleinrichtung zumindest eine Positionierhilfe auf, die relativ zum ersten bzw. zum zweiten Schwenkelement zumindest anteilig in die Einstellrichtung verschieblich gelagert ist. Insbesondere ist die Positionierhilfe relativ zu dem Schwenkelement, dass die Einstelleinrichtung umfasst, vorzugsweise ausschließlich in die Einstellrichtung verschieblich gelagert. Durch diese Ausbildung der Einstelleinrichtung ist es zumindest in einem begrenzten Variationsbereich zu einer Anpassung des Spanndrehmomentes nicht notwendig, das Rückstellelement mit einer anderen Positionierhilfe zu koppeln. Stattdessen kann man die Positionierhilfe mit dem daran montierten Rückstellelement verschoben werden. Hierdurch ist die Variation des Spanndrehmomentes erleichtert und lässt es sich insbesondere stufenlos variieren.

Bevorzugt sind mehrere Positionierhilfen gemeinsam oder relativ zueinander verschieblich gelagert, um den Anwendungsbereich der Spannvorrichtung weiter zu erhöhen. Besonders bevorzugt umfasst das erste Schwenkelement eine Einstelleinrichtung mit einer verschieblich gelagerten Positionierhilfe und das zweite Schwenkelement eine Einstelleinrichtung mit einer Mehrzahl von voneinander beabstandeten Positionierhilfen. Auf diese Weise lässt sich zunächst durch die Auswahl einer der mehreren Positionierhilfen des zweiten Schwenkelementes ein geeigneter Spanndrehmomentbereich wählen und das Spanndrehmoment sich anschließend durch die verschiebliche Positionierhilfe exakt einstellen.

Bevorzugt umfasst die Einstelleinrichtung zumindest ein Stellelement. Das Stellelement weist bevorzugt einen Gewindeabschnitt auf und ist relativ zum ersten bzw. relativ zum zweiten Schwenkelement zumindest anteilig drehbar ausgebildet. Durch das Stellelement, dessen Gewindeabschnitt insbesondere in einer korrespondierenden Gewindebohrung des Schwenkelementes oder zumindest einer daran angeordneten Mutter angeordnet ist, lässt sich insbesondere die zumindest eine Positionierhilfe bewegen. Insbesondere ist das Stellelement relativ zum Schwenkelement um eine Einstelldrehachse drehbar, wodurch die Position der Positionierhilfe in Richtung der Einstelldrehachse, die insbesondere mit der Einstellrichtung zusammenfällt, geändert wird. Vorzugsweise setzt sich eine Einstellbewegung des Stellelementes und/oder der Positionierhilfe zusammen aus einer Drehbewegung und einer Verschiebung als überlagerte Bewegungskomponenten.

Das Stellelement ist bevorzugt manuell drehbar oder durch einen daran angeordneten Antrieb automatisch drehbar ausgebildet. Hierdurch lässt sich die Stufenlose Einstellbarkeit des Spanndrehmomentes durch mechanisch einfache und zuverlässige Bauteile realisieren. In einer alternativen, bevorzugten Ausgestaltung der Erfindung ist das Stellelement als Hydraulik- oder Pneumatikzylinder, als Gasdruckdämpfer oder als Linearantrieb ausgebildet, der zu einer Umpositionierung der Positionierhilfe relativ zum Schwenk-element ausgebildet ist.

Vorzugsweise hat zumindest eine Positionierhilfe der Einstelleinrichtung des ersten Schwenkelementes zumindest im Betrieb einen kürzeren Abstand zur zweiten Spanndrehachse als die erste Spanndrehachse. Umgekehrt hat vorzugsweise zumindest eine Positionierhilfe der Einstelleinrichtung des zweiten Schwenkelementes zumindest im Betrieb einen kürzeren Abstand zur ersten Spanndrehachse als die zweite Spanndrehachse. Somit liegt die Positionierhilfe insbesondere von der Schwenkachse aus betrachtet zwischen den Spanndrehachsen. Durch diese Anordnung der Positionierhilfe kann das Rückstellelement kürzer ausgebildet sein und ist der Platzbedarf der Spannvorrichtung geringer. Dadurch ist die Spannvorrichtung auch bei solchen Getrieben einsetzbar, die nur einen geringen Bauraum bereitstellen.

Die Einstellrichtung ist insbesondere parallel zu einer Ebene, die orthogonal zur Schwenkachse angeordnet ist. Bevorzugt ist die Einstellrichtung bezogen auf die Schwenkachse zumindest anteilig tangential und/oder radial orientiert. Insbesondere ist die Einstelleinrichtung gegenüber einer radialen bzw. gegenüber einer tangentialen um höchstens 30°, bevorzugt höchstens 10° verschwenkt. Dabei schneidet die bezogen auf die Schwenkachse Radiale zumindest eine Positionierhilfe bzw. entspricht der Radius der Tangentialen einer Strecke von der Schwenkachse zur Positionierhilfe. Insbesondere ist die Einstellrichtung der Einstelleinrichtung gegenüber der Radialen zum Schwenk-element hin verschwenkt, dass die Einstelleinrichtung nicht umfasst. Insbesondere entspricht der Winkel, um den die Einstellrichtung verschwenkt ist, zumindest im Wesentlichen dem Winkel, den in einer Seiteneinsicht eine Gerade durch die erste Spanndrehachse und die Schwenkachse und einer Gerade durch die zweite Spann-drehachse und die Schwenkachse einschließen. Hierdurch wird bei einer Umpositionierung des Rückstellelementes lediglich der Hebelarm geändert und insbesondere die Rückstellkraft unverändert gelassen, was die Langlebigkeit des Rückstellelementes erhöht.

Erfindungsgemäß ist zumindest eine Positionierhilfe der Einstelleinrichtung des ersten und/oder des zweiten Schwenkelementes von der Schwenkachse weiter beabstandet als die erste bzw. zweite Spanndrehachse. Insbesondere ist der Hebelarm der Positionierhilfe damit größer als der Hebelarm der Spanndrehachse bezogen auf die Schwenkachse. Durch diese Ausbildung der erfindungsgemäßen Spannvorrichtung lässt sich ein erforderliches Spanndrehmoment schon mit geringeren Rückstellkräften erreichen und somit kleiner bauenden Rückstellelemente verwenden.

Bevorzugt hat das erste oder das zweite Schwenkelement, bevorzugt beide Schwenkelemente, einen ersten Schwenkelementschenkel und einen zweiten Schwenkelementschenkel. Der erste Schwenkelementschenkel erstreckt sich zwischen der Schwenkachse und der ersten (beim ersten Schwenkelement) bzw. zweiten (beim zweiten Schwenkelement) Spanndrehachse. Der zweite Schwenkelementschenkel erstreckt sich ausgehend von der ersten bzw. zweiten Spanndrehachse von der Schwenkachse weg. Dabei ist der erste Schwenkelementschenkel angewinkelt zum zweiten Schwenkelementschenkel verlaufend ausgebildet. Insbesondere ist der zweite Schwenkelementschenkel in einer Seitenansicht in die Richtung gegenüber dem ersten Schwenkelementschenkel angewinkelt, in die im Betrieb das Rückstellelement mit seiner Rückstellkraft auf das jeweilige Schwenkelement einwirkt. Insbesondere bei einer vorbeschriebenen Orientierung der Einstellrichtung lässt sich durch diese Ausbildung des Schwenkelementes bzw. der Schwenkelemente eine besonders kompakte Bauform der Spannvorrichtung erreichen, wodurch diese in einem besonders weiten Bereich von Getrieben anwendbar ist.

In einer vorteilhaften Ausgestaltung der Erfindung hat die Spannvorrichtung ein Rahmenelement, an dem das ersten Schwenkelement und das zweite Schwenkelement schwenkbeweglich angeordnet sind. Bevorzugt sind die Schwenkelemente um unterschiedliche Schwenkachsen schwenkbeweglich angeordnet oder jeweils um die eine Schwenkachse schwenkbeweglich angeordnet. In letzterem Fall wirkt das Spanndrehmoment bevorzugt ausschließlich um die Schwenkachse. Alternativ sind die Schwenkelemente bevorzugt unmittelbar aneinander schwenkbeweglich angeordnet und vorzugsweise eines der beiden Schwenkelemente schwenkbeweglich an dem Rahmenelement bzw. dem Maschinenrahmen angeordnet. Hieraus ergibt sich eine besonders zuverlässige und platzsparende Konstruktion.

Vorzugsweise ist das Rahmenelement in eine Umlaufrichtung des zu spannenden Riemens oder der zu spannenden Kette betrachtet zumindest Abschnittsweise im Wesentlichen U-förmig. Die Schwenkachse verläuft dabei bevorzugt durch beide seitlichen Schenkel des U, das bevorzugt derart ausgebildet ist, das im Betrieb der Riemen bzw. der Kette zwischen der Schwenkachse und dem Mittelteil des Us hindurch verläuft. Durch diese Ausbildung des Rahmenelementes ist die Spannvorrichtung auf einfache Weise auswechselbar bzw. nachrüstbar.

Bevorzugt umfasst das Rahmenelement zwei sich orthogonal zur Schwenkachse flächig erstreckende Rahmenelementseitenteile, die insbesondere durch ein sich parallel zur Schwenkachse erstreckendes Mittelteil verbunden sind. Alle drei Teile erstrecken sich flächig in die Umlaufrichtung des Riemens bzw. der Kette und bauen dadurch besonders schlank, d. h. sie fügen sich mit minimalen Bauraumbedarf um den zu spannenden Riemen bzw. die zu spannenden Kette.

Vorzugsweise umfasst die Spannvorrichtung zumindest zwei erste und/oder zwei zweite Schwenkelemente, die in der Umlaufrichtung des Riemens bzw. der Kette betrachtet jeweils einseitig des ersten bzw. des zweiten Spannelementes angeordnet sind. Insbesondere sind die ersten bzw. zweiten Schwenkelemente, vorzugsweise sämtlich Schwenkelemente baugleich oder zumindest symmetrisch aufgebaut. Bevorzugt haben beide ersten bzw. beide zweiten Schwenkelemente eine Einstelleinrichtung wodurch das Spanndrehmoment mit einem noch weiteren Bereich einstellbar ist.

Die Erfindung wird weiterhin gelöst durch ein Getriebe, das insbesondere dem vorbeschriebenen entspricht. Das Getriebe umfasst zumindest zwei jeweils um eine Umlenkdrehachse drehbar gelagerte Umlenkelemente zur Umlenkung zumindest eines Riemens oder zumindest einer Kette. Das Getriebe umfasst weiterhin eine vor- und/oder nachbeschriebene Spannvorrichtung. Die Schwenkachse verläuft abschnittsweise zwischen den Umlenkelementen. Insbesondere verläuft die Schwenkachse in einer von den Umlenkdrehachsen aufgespannten Umlenkebene und ist bevorzugt parallel zu den Umlenkdrehachsen orientiert. Durch die Lagerung der Schwenkelemente im Zwischenraum zwischen den Umlenkelementen und den Riemen bzw. der Kette ist der Bauraumbedarf des Getriebes besonders klein. Durch die Positionierung der Schwenkachse in der Umlenkebene wird erreicht, dass auf beide benachbarten Trums des Riemens bzw. der Kette die gleiche Spannwirkung ausgeübt werden kann.

Bevorzugt ist die Schwenkachse außermittig zwischen den Umlenkelementen und/oder zwischen den Umlenkdrehachsen angeordnet. Insbesondere liegen die Spannelemente im Betrieb zumindest im Wesentlichen mittig an den jeweiligen Trums des Riemens bzw. der Kette an. Durch die außermittige Positionierung der Schwenkachse und die dadurch ermöglichte möglichst mittige Positionierung der Spannelemente wird erreicht, dass ein Winkel, um den der Riemen bzw. die Kette durch das Spannelement im Betrieb umgelenkt wird, möglichst klein bleibt und somit eine unnötige Mehrbelastung des Riemens bzw. der Kette im Betrieb vermieden. Dadurch kann die Kraftübertragung des Getriebes bereits mit einem Riemen bzw. einer Kette mit nur einem geringen Querschnitt erreicht werden.

Weiterhin wird die Aufgabe durch eine Hackfruchterntemaschine gelöst, die eine vor- und/oder nachbeschriebene Spannvorrichtung oder ein vor- und/oder nachbeschriebenes Getriebe umfasst. Das Getriebe dient hierbei insbesondere der Übertragung einer mechanischen Leistung von einem Antrieb der Hackfruchterntemaschine auf zumindest in Förderelement der Hackfruchterntemaschine.

Weitere Einzelheiten und Vorteile der Erfindung sind den nachfolgend beschriebenen, schematisch dargestellten Ausführungsbeispielen zu entnehmen, es zeigen:
- Fig. 1: eine Seitenansicht eines erfindungsgemäßen Getriebes ohne Darstellung des Rückstellelementes,
- Fig. 2: eine perspektivische Ansicht des erfindungsgemäßen Getriebes ohne Darstellung des Rückstellelementes,
- Fig. 3: eine Seitenansicht des erfindungsgemäßen Getriebes in einer ersten Einstellung,
- Fig. 4: eine perspektivische Ansicht des erfindungsgemäßen Getriebes in der ersten Einstellung,
- Fig. 5: eine Seitenansicht des erfindungsgemäßen Getriebes in einer zweiten Einstellung,
- Fig. 6: eine perspektivische Ansicht des erfindungsgemäßen Getriebes in der zweiten Einstellung,
- Fig. 7: eine Seitenansicht des erfindungsgemäßen Getriebes in einer dritten Einstellung,
- Fig. 8: eine perspektivische Ansicht des erfindungsgemäßen Getriebes in der dritten Einstellung.

Die nachfolgend erläuterten Merkmale der erfindungsgemäßen Ausführungsbeispiele können auch einzeln oder in anderen Kombinationen als dargestellt oder beschrieben Gegenstand der Erfindung sein, stets aber zumindest in Kombination mit den Merkmalen des Anspruchs 1. Sofern sinnvoll, sind funktional gleichwirkende Teile mit identischen Bezugsziffern versehen.

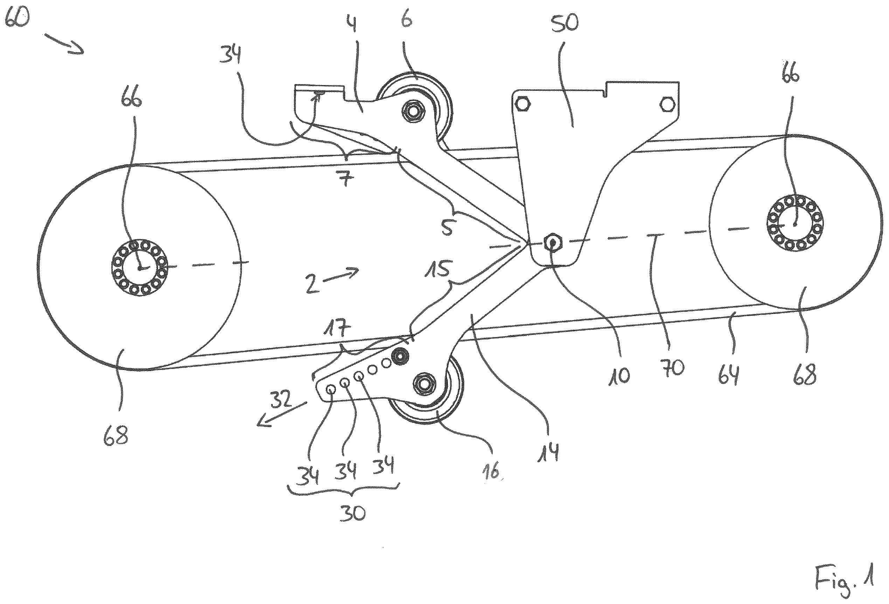

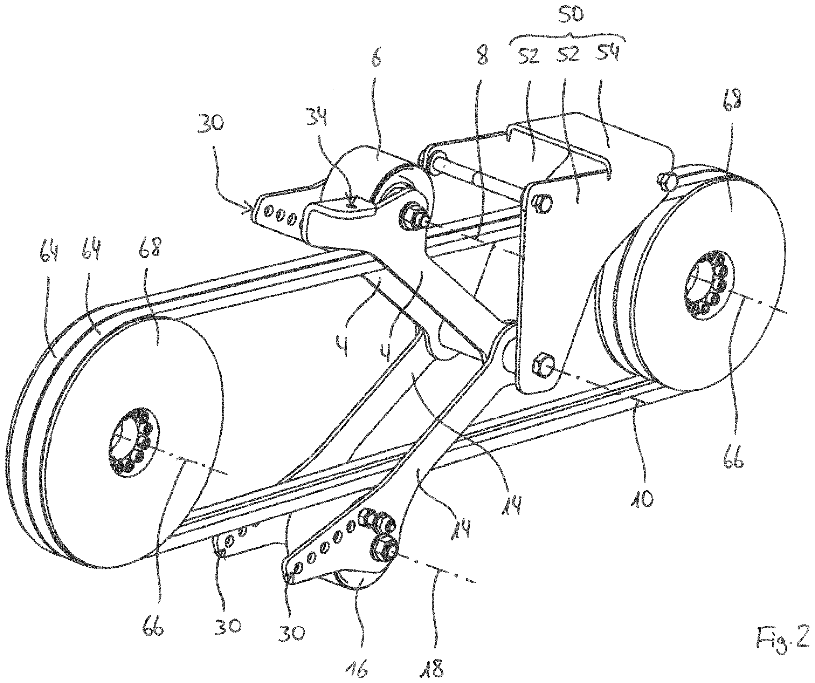

Sämtliche Figuren zeigen ein erfindungsgemäßes Getriebe 60. Das Getriebe 60 hat zwei Umlenkelemente 68, die sich im Betrieb jeweils um eine Umlenkdrehachse 66 drehen. Die Umlenkelemente 68 dienen zur Umlenkung zweier Riemen 64 (vgl. Fig 1 und 2).

Das Getriebe 60 umfasst eine erfindungsgemäße Spannvorrichtung 2, welche zwei erste Schwenkelemente 4 und zwei zweite Schwenkelemente 14 aufweist (vgl. Figur 2). An den ersten Schwenkelementen 4 ist erstes Spannelement 6 drehbar um eine erste Spanndrehachse 8 gelagert. An den zweiten Schwenkelementen 14 ist ein zweites Spannelement 16 drehbar um eine zweite Spanndrehachse 18 gelagert. Die ersten Schwenkelemente 4 sind im Betrieb relativ zueinander unbeweglich, ebenso sind die zweiten Schwenkelemente 14 im Betrieb relativ zueinander unbeweglich. Die zweiten Schwenkelemente 14 sind im Betrieb um eine Schwenkachse 10 schwenkbeweglich mit den ersten Schwenkelementen 4 gekoppelt.

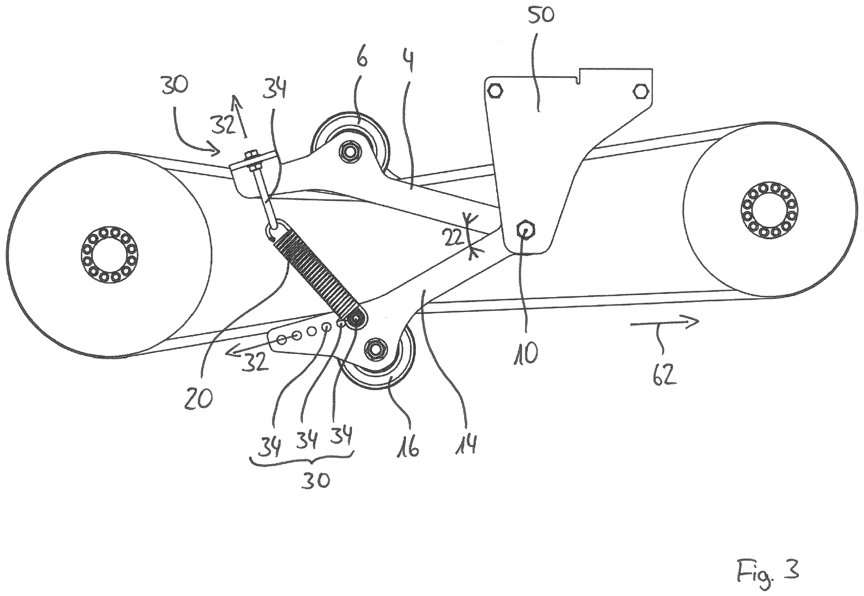

Die erfindungsgemäße Spannvorrichtung 2 umfasst ein Rückstellelement 20 welches in den Figuren 1 und 2 nicht dargestellt ist. Das Rückstellelement 20 ist zur Ausbildung eines um die Schwenkachse 10 wirkenden Spanndrehmomentes 22 (vgl. Figuren 3, 5 und 7) zwischen einem der ersten Schwenkelemente 4 und einem der zweiten Schwenkelemente 14 angeordnet. Sowohl das erste Schwenkelement 4, an dem das Rückstellelement 20 angeordnet ist, als auch das zweite Schwenkelement 14, an dem das Rückstellelement 20 angeordnet ist, umfasst eine Einstelleinrichtung 30, die zu einer Einstellung des Spanndrehmomentes 22 ausgebildet ist. Im Einzelnen sind die Einstelleinrichtungen 30 zu einer variablen Positionierung des Rückstellelementes 20 an den genannten Schwenkelementen 4, 14 ausgebildet.

Die Einstelleinrichtung 30 des zweiten Schwenkelementes 14, an denen das Rückstellelement 20 angeordnet ist, weist sechs Positionierhilfen 34 auf, die in eine Einstellrichtung 32 von einander beanstandet sind und zu einer Positionierung des Rückstellelementes 20 ausgebildet sind. Bei diesen Positionierhilfen 34 handelt es sich um Bohrungen in dem zweiten Schwenkelement 14. Die Einstelleinrichtung 30 des ersten Schwenkelementes 4, an dem das Rückstellelement 20 angeordnet ist, weist eine Positionierhilfe 34 auf, die relativ zum ersten Schwenkelement 4 anteilig in eine Einstellrichtung 32 verschieblich ist. Die Einstellrichtung 32 der Einstelleinrichtung 30 des ersten Schwenkelementes 4 weicht dabei von der Einstellrichtung 32 der Einstelleinrichtung 30 des zweiten Schwenkelementes 14 ab.

Die Einstelleinrichtung 30 des ersten Schwenkelementes 4 umfasste ein Stellelement 36. Das Stellelement 36 weist einen nicht dargestellten Gewindeabschnitt auf und ist relativ zum ersten Schwenkelement 4 anteilig drehbar ausgebildet. Die als Haken ausgebildete Positionierhilfe 34 der Einstelleinrichtung 30 des ersten Schwenkelementes 4 ist einstückig mit dem Stellelement ausgebildet, wobei der Gewindeabschnitt in einem von dem Rückstellelement 20 abgewandten Bereich des Bauteils angeordnet ist. Durch den Gewindeabschnitt ist das Bauteil relativ zu den dargestellten Muttern drehbar, wobei eine Drehbewegung überlagert ist mit einer Verschiebung der Positionierhilfe 34 in die Einstellrichtung 32.

Die gezeigten Positionierhilfen 34 haben im Betrieb (vgl. Fig. 3 bis 8) zumindest teilweise einen kürzeren Abstand zur Spanndrehachse 8, 18 des gegenüberliegenden Schwenkelementes 4, 14 als die zweite bzw. erste Spanndrehachse 18, 8 desjenigen Schwenkelementes 14, 4 das die Positionierhilfen 34 umfasst. Die Einstellrichtung 32 der Einstelleinrichtung 30 des ersten Schwenkelements 4 ist bezogen auf die Schwenkachse 10 hauptsächlich in eine tangentiale Richtung orientiert, wobei die Einstellrichtung 32 gegenüber einer Tangentialen, deren Radius einem Abstand der Schwenkachse 10 zur Positionierhilfe 34 der Einstelleinrichtung 30 entspricht, um höchstens 10° verschwenkt ist. Die Einstellrichtung 32 der Einstelleinrichtung 30 des zweiten Schwenkelements 14 ist bezogen auf die Schwenkachse anteilig radial orientiert, wobei diese Einstellrichtung 32 gegenüber einer Radialen, die zumindest eine Positionierhilfe 34 der Einstelleinrichtung 30 des zweiten Schwenkelementes 14 schneidet, um höchstens 10° verschwenkt ist.

Die dargestellten Positionierhilfen 34 der Einstelleinrichtungen 30 sind von der Schwenkachse 10 weiter beabstandet als die Spanndrehachsen 8, 18 der jeweiligen Schwenkelemente 4,14. Die Positionierhilfen 34 sind an einem zweiten Schwenkelementschenkel 7, 17 der Schwenkelemente 4, 14 angeordnet, der sich ausgehend von der Spanndrehachse 8, 18 des jeweiligen Schwenkelementes 4, 14 von der Schwenkachse 10 wegerstreckt. An den zweiten Schwenkelementschenkel 7, 17 schließt sich in Richtung der Schwenkachse 10 ein erster Schwenkelementschenkel 5, 15 an, der relativ zum jeweiligen zweiten Schwenkelementschenkel 7, 17 angewinkelt verlaufend ausgebildet ist.

Die Spannvorrichtung 2 umfasst ein Rahmenelement 50, das zur Schwenkachse 10 ortsfest angeordnet ist. An dem Rahmenelement 50 sind das erste Schwenkelement 4 und das zweiten Schwenkelement 14 schwenkbeweglich angeordnet. Das Rahmenelement 50 ist in eine Umlaufrichtung 62 des zu spannenden Riemens 64 betrachtet im Wesentlichen U-förmig ausgebildet. Das Rahmenelement 50 umfasst zwei sich orthogonal zur Schwenkachse 10 flächig erstreckende Rahmenelementseitenteile 52, die durch ein sich parallel zur Schwenkachse 10 erstreckendes Mittelteil 54 verbunden sind (vgl. Fig. 2).

Die Schwenkachse 10 verläuft in einer von den Umlenkdrehachsen 68 aufgespannten Umlenkebene 70 (vgl. Fig. 1). Dabei ist die Schwenkachse 10 außermittig zwischen den Umlenkdrehachsen 64 und außermittig zwischen den Umlenkelementen 68 angeordnet.

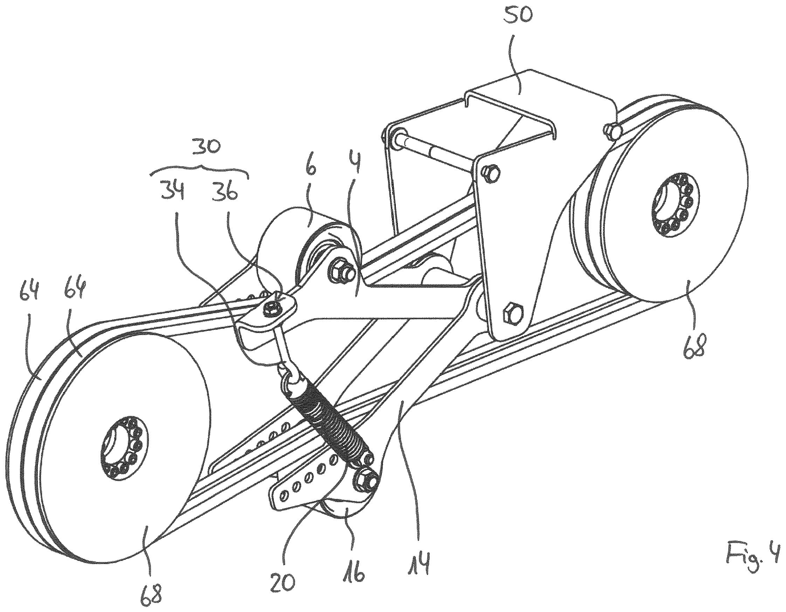

Die Fig. 3 bis 8 zeigen dasselbe erfindungsgemäße Getriebe 60 bei unterschiedlichen Einstellungen, d.h. mit unterschiedlichen Spanndrehmomenten 22. In der Einstellung gemäß den Fig. 3 und 4 ist das Spanndrehmoment 22 am geringsten. Das Rückstellelement 20 ist an der der Schwenkachse 10 nächstgelegenen Positionierhilfe 34 der Einstelleinrichtung 30 des zweiten Schwenkelementes 14 angeordnet, wodurch der Hebelarm, mit dem die Rückstellkraft das Spanndrehmoment 22 erzeugt, kleinstmöglich ist. Außerdem ist die Positionierhilfe 34 der Einstelleinrichtung 30 des ersten Schwenkelementes 4 weitestmöglich in Richtung des zweiten Schwenkelementes 14 verschoben, wodurch die Rückstellkraft kleinstmöglich ist.

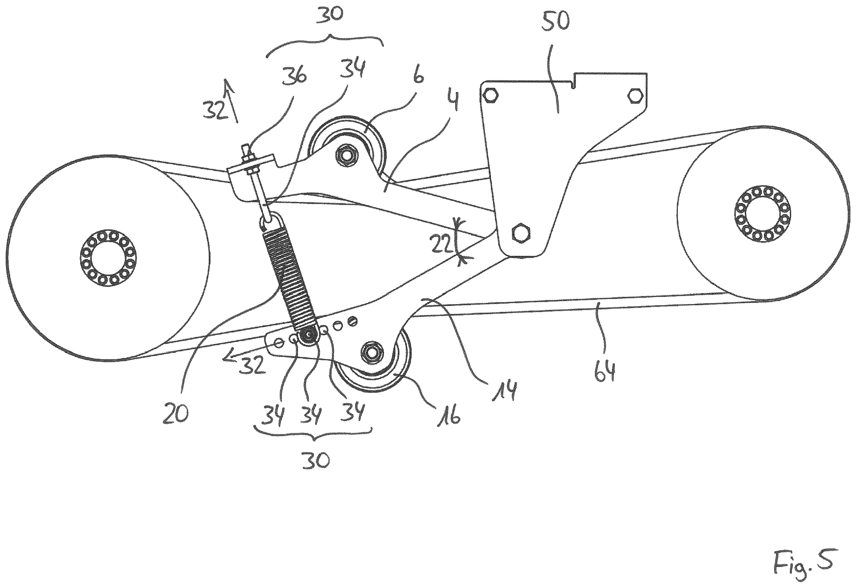

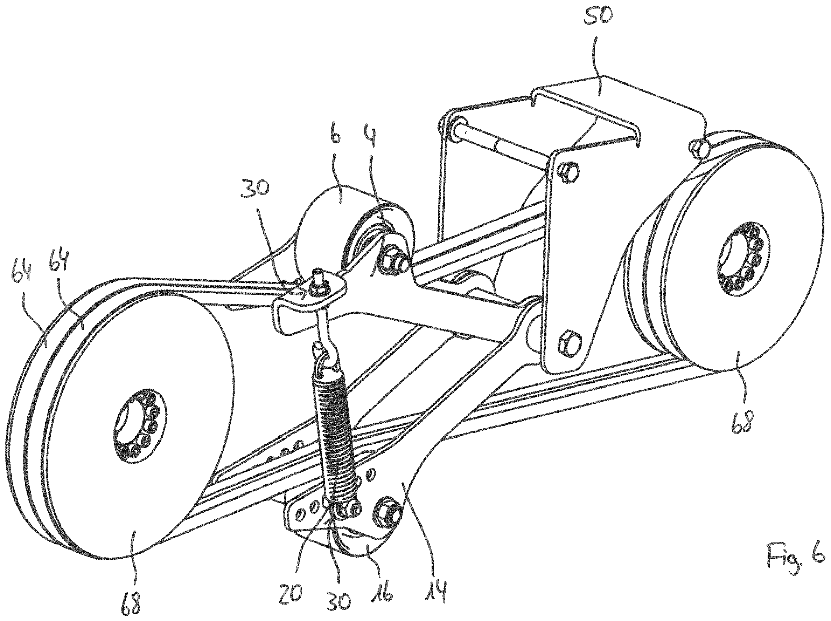

In der Einstellung gemäß den Fig. 5 und 6 erzeugt die Spannvorrichtung 2 ein mittelgroßes Spanndrehmoment 22. Hier ist das Rückstellelement 20 an einer mittleren Positionierhilfe 34 der Einstelleinrichtung 30 des zweiten Schwenkelements angeordnet. Außerdem ist die Positionierhilfe 34 der Einstelleinrichtung 30 des ersten Schwenkelementes 4 gegenüber der Einstellung in den Fig. 3 und 4 in die Einstellrichtung 32 verschoben, wodurch die Rückstellkraft erhöht wird.

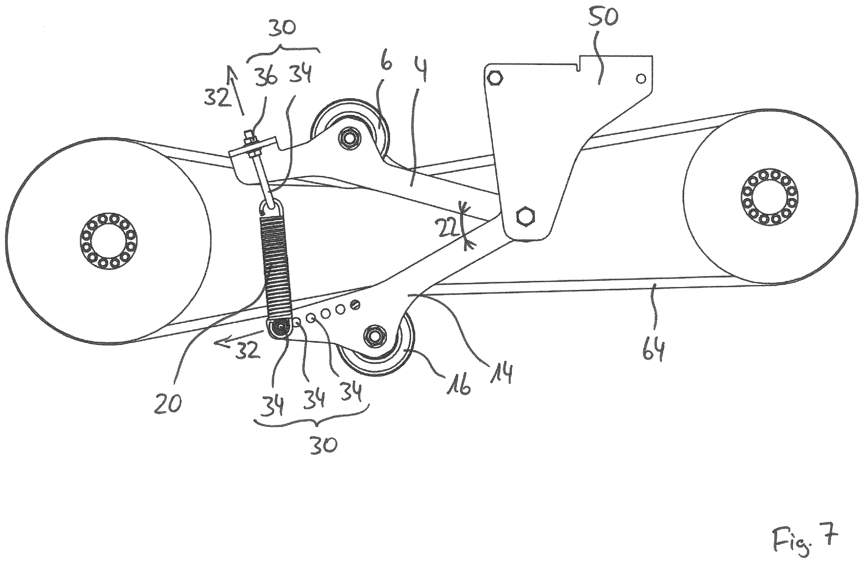

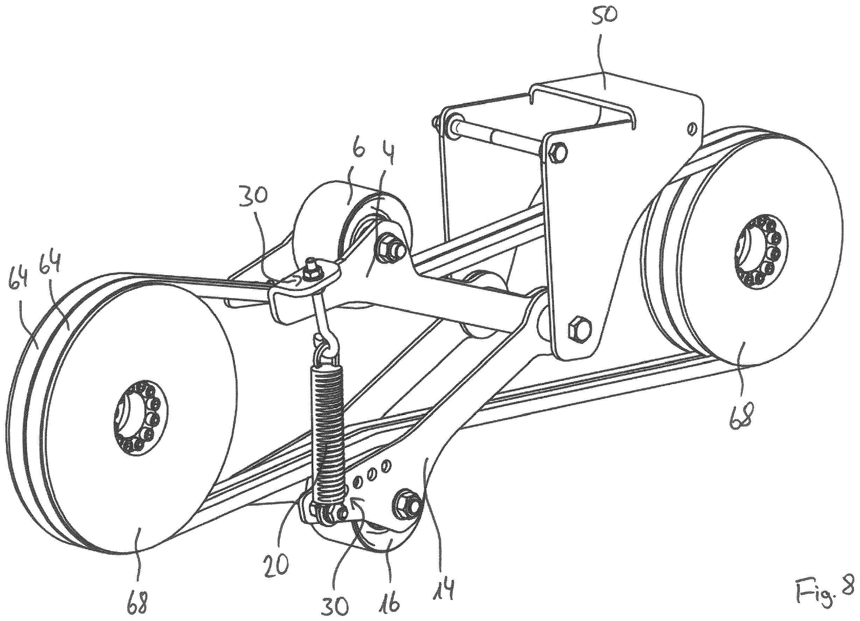

In der Einstellung gemäß den Fig. 7 und 8 entwickelt die Spannvorrichtung 2 das größte Spanndrehmoment 22. Hier ist das Rückstellelement 20 an der am weitesten von der Schwenkachse 10 entfernten Positionierhilfe 34 der Einstelleinrichtung 30 des zweiten Schwenkelementes 14 angeordnet. Die Positionierhilfe 34 der Einstelleinrichtung 30 des ersten Schwenkelementes hat dieselbe Position wie in der Einstellung gemäß den Fig. 5 und 6.

## Patentansprüche

1. Spannvorrichtung (2) für ein Riemen- oder Kettengetriebe umfassend zumindest ein erstes Schwenkelement (4), an dem ein erstes Spannelement (6) drehbar um eine erste Spanndrehachse (8) gelagert ist, und zumindest ein zweites Schwenkelement (14), an dem ein zweites Spannelement (16) drehbar um eine zweite Spanndrehachse (18) gelagert ist und das im Betrieb zumindest um eine Schwenkachse (10) schwenkbeweglich mit dem ersten Schwenkelement (4) gekoppelt ist, und zumindest ein Rückstellelement (20), das zur Ausbildung eines zumindest anteilig um die Schwenkachse (10) wirkenden Spanndrehmomentes (22) zwischen dem ersten Schwenkelement (4) und dem zweiten Schwenkelement (14) angeordnet ist, wobei die Spannvorrichtung zumindest eine zu einer Einstellung des Spanndrehmomentes (22) ausgebildete Einstelleinrichtung (30) aufweist, die von zumindest einem der Schwenkelemente (4, 14) umfasst ist und zur variablen Positionierung des Rückstellelementes (20) an dem Schwenkelement (4, 14) ausgebildet ist, **dadurch gekennzeichnet, dass** die Einstelleinrichtung (30) eine Mehrzahl von in eine Einstellrichtung (32) voneinander beabstandeten Positionierhilfen (34) zur Positionierung des Rückstellelementes (20) aufweist, wobei zumindest eine Positionierhilfe (34) der Einstelleinrichtung (30) des ersten und/oder des zweiten Schwenkelementes (4, 14) von der Schwenkachse (10) weiter beabstandet ist als die erste bzw. zweite Spanndrehachse (8, 18).

2. Spannvorrichtung nach einem der vorhergehenden Ansprüche, **dadurch gekennzeichnet, dass** die Einstelleinrichtung (30) zumindest eine Positionierhilfe (34) aufweist, die relativ zum ersten bzw. zweiten Schwenkelement (4, 14) zumindest anteilig in die Einstellrichtung (32) verschieblich gelagert ist.

3. Spannvorrichtung nach Anspruch 2, **dadurch gekennzeichnet, dass** die Einstelleinrichtung (30) zumindest ein Stellelement (36) umfasst, das einen Gewindeabschnitt aufweist und relativ zum ersten bzw. zweiten Schwenkelement (4, 14) zumindest anteilig drehbar ausgebildet ist.

4. Spannvorrichtung nach einem der vorhergehenden Ansprüche, **dadurch gekennzeichnet, dass** zumindest eine Positionierhilfe (34) der Einstelleinrichtung (30) des ersten Schwenkelementes (4) oder des zweiten Schwenkelementes (14) zumindest im Betrieb einen kürzeren Abstand zur zweiten bzw. ersten Spanndrehachse (8, 18) hat als die erste bzw. zweite Spanndrehachse (18, 8).

5. Spannvorrichtung nach einem der vorhergehenden Ansprüche, **dadurch gekennzeichnet, dass** die Einstellrichtung (32) bezogen auf die Schwenkachse (10) zumindest anteilig tangential und/oder radial orientiert ist, insbesondere gegenüber einer zumindest eine Positionierhilfe (34) schneidenden Radialen bzw. gegenüber einer Tangentialen, deren Radius einem Abstand der Schwenkachse (10) zur Positionierhilfe (34) entspricht, um höchstens 30°, bevorzugt um höchstens 10° verschwenkt ist.

6. Spannvorrichtung nach einem der vorhergehenden Ansprüche, **dadurch gekennzeichnet, dass** das erste und/oder das zweite Schwenkelement (4, 14) einen ersten Schwenkelementschenkel (5, 15), der sich zwischen der Schwenkachse (10) und der ersten bzw. zweiten Spanndrehachse (8, 18) erstreckt, und einen zweiten Schwenkelementschenkel (7, 17) hat, der sich ausgehend von der ersten bzw. zweiten Spanndrehachse (8, 18) von der Schwenkachse (10) wegerstreckt, wobei der erste Schwenkelementschenkel (5, 15) angewinkelt zum zweiten Schwenkelementschenkel (7, 17) verlaufend ausgebildet ist.

7. Spannvorrichtung nach einem der vorhergehenden Ansprüche, **gekennzeichnet durch** ein Rahmenelement (50), an dem das erste Schwenkelement (4) und das zweite Schwenkelement (14), insbesondere jeweils um die Schwenkachse (10), schwenkbeweglich angeordnet sind.

8. Spannvorrichtung nach Anspruch 7, **dadurch gekennzeichnet, dass** das Rahmenelement (50) in eine Umlaufrichtung (62) des zu spannenden Riemens (64) oder der zu spannenden Kette betrachtet zumindest abschnittsweise im Wesentlichen U-förmig ausgebildet ist.

9. Spannvorrichtung nach Anspruch 7 oder 8, **dadurch gekennzeichnet, dass** das Rahmenelement (50) zwei sich orthogonal zur Schwenkachse (10) flächig erstreckende Rahmenelementseitenteile (52) umfasst, die insbesondere durch ein sich parallel zur Schwenkachse (10) erstreckendes Mittelteil (54) verbunden sind.

10. Spannvorrichtung nach einem der vorhergehenden Ansprüche, **gekennzeichnet durch** zumindest zwei erste und/oder zumindest zwei zweite Schwenkelemente (4, 14), die in der Umlaufrichtung (62) betrachtet jeweils einseitig des ersten bzw. zweiten Spannelementes (6, 16) angeordnet sind.

11. Getriebe (60) umfassend zumindest zwei je um eine Umlenkdrehachse (66) drehbar gelagerte Umlenkelemente (68) zur Umlenkung zumindest eines Riemens (64) oder einer Kette und umfassend eine Spannvorrichtung (2) nach einem der vorhergehenden Ansprüche, wobei die Schwenkachse (10) abschnittsweise zwischen den Umlenkelementen (68), insbesondere in einer von den Umlenkdrehachsen (66) aufgespannten Umlenkebene (70) verläuft.

12. Getriebe nach Anspruch 11, **dadurch gekennzeichnet, dass** die Schwenkachse (10) außermittig zwischen den Umlenkelementen (68) und/oder zwischen den Umlenkdrehachsen (66) angeordnet sind.

13. Hackfruchterntemaschine umfassend eine Spannvorrichtung (2) nach einem der Ansprüche 1 bis 10, insbesondere umfassend ein Getriebe (60) nach Anspruch 11 oder 12.

## Claims

1. Tensioning device (2) for a belt or chain transmission, comprising at least one first pivoting element (4), on which a first tensioning element (6) is mounted such that it can rotate about a first tensioning axis of rotation (8), and at least one second pivoting element (14), on which a second tensioning element (16) is mounted such that it can rotate about a second tensioning axis of rotation (18) and which, in operation, is coupled to the first pivoting element (4) such that it can be moved pivotably at least about a pivot axis (10), and at least one resetting element (20), which, to form a tensioning torque (22) acting at least partially about the pivot axis (10), is arranged between the first pivoting element (4) and the second pivoting element (14), wherein the tensioning device has at least one adjusting device (30) designed to adjust the tensioning torque (22), which is comprised by at least one of the pivoting elements (4, 14) and is designed for the variable positioning of the resetting element (20) on the pivoting element (4, 14),
**characterized in that** the adjusting device (30) has a plurality of positioning aids (34) arranged at a distance from one another in an adjustment direction (32) for positioning the resetting element (20), wherein at least one positioning aid (34) of the adjusting device (30) of the first and/or the second pivoting element (4, 14) is further apart from the pivot axis (10) than the first or second tensioning axis of rotation (8, 18).

2. Tensioning device according to one of the preceding claims, **characterized in that** the adjusting device (30) has at least one positioning aid (34), which is mounted relative to the first or second pivoting element (4, 14) such that it can be displaced at least partially in the adjustment direction (32).

3. Tensioning device according to Claim 2, **characterized in that** the adjusting device (30) comprises at least one actuator (36), which has a threaded section and is designed such that it can be rotated at least partially relative to the first or second pivoting element (4, 14).

4. Tensioning device according to one of the preceding claims, **characterized in that**, at least during operation, at least one positioning aid (34) of the adjusting device (30) of the first pivoting element (4) or of the second pivoting element (14) has a shorter distance from the second or first tensioning axis of rotation (8, 18) than the first or second tensioning axis of rotation (18, 8).

5. Tensioning device according to one of the preceding claims, **characterized in that** the adjusting device (32) is oriented at least partly tangentially and/or radially relative to the pivot axis (10), in particular is pivoted by at most 30°, preferably by at most 10°, with respect to a radial line intersecting at least one positioning aid (34) or with respect to a tangent, the radius of which corresponds to a distance of the pivot axis (10) from the positioning aid (34).

6. Tensioning device according to one of the preceding claims, **characterized in that** the first and/or the second pivoting element (4, 14) has a first pivoting element limb (5, 15) which extends between the pivot axis (10) and the first or second tensioning axis of rotation (8, 18), and a second pivoting element limb (7, 17) which, starting from the first or second tensioning axis of rotation (8, 18), extends away from the pivot axis (10), wherein the first pivoting element limb (5, 15) is designed to extend at an angle to the second pivoting element limb (7, 17).

7. Tensioning device according to one of the preceding claims, **characterized by** a frame element (50), on which the first pivoting element (4) and the second pivoting element (14) are arranged, in particular such that they can each be moved pivotably about the pivot axis (10).

8. Tensioning device according to Claim 7, **characterized in that**, viewed in a direction of circulation (62) of the belt (64) to be tensioned or of the chain to be tensioned, the frame element (50) is designed to be substantially U-shaped, at least in some sections.

9. Tensioning device according to Claim 7 or 8, **characterized in that** the frame element (50) comprises two frame element side parts (52) extending flat and orthogonally to the pivot axis (10), which in particular are connected by a central part (54) extending parallel to the pivot axis (10).

10. Tensioning device according to one of the preceding claims, **characterized by** at least two first and/or at least two second pivoting elements (4, 14) which, viewed in the direction of circulation (62), are each arranged at the ends of the first and second tensioning element (6, 16).

11. Transmission (60) comprising at least two deflection elements (68) mounted such that they can each rotate about a deflection axis of rotation (66) for deflecting at least one belt (64) or a chain, and comprising a tensioning device (2) according to one of the preceding claims, wherein the pivot axis (10) extends in some sections between the deflection elements (68), in particular in a deflection plane (70) covered by the deflection axes of rotation (66).

12. Transmission according to Claim 11, **characterized in that** the pivot axes (10) are arranged eccentrically between the deflection elements (68) and/or between the deflection axes of rotation (66).

13. Root crop harvesting machine comprising a tensioning device (2) according to one of Claims 1 to 10, in particular comprising a transmission (60) according to Claim 11 or 12.

## Revendications

1. Dispositif de tension (2) pour une transmission par courroie ou par chaîne, comprenant au moins un premier élément pivotant (4) sur lequel un premier élément de tension (6) est monté de manière rotative autour d'un premier axe de rotation de tension (8), et au moins un deuxième élément pivotant (14), sur lequel un deuxième élément de tension (16) est monté de manière rotative autour d'un deuxième axe de rotation de tension (18) et qui, en fonctionnement, est couplé au premier élément pivotant (4) de manière mobile en pivotement au moins autour d'un axe de pivotement (10), et au moins un élément de rappel (20) qui est agencé entre le premier élément pivotant (4) et le deuxième élément pivotant (14) pour former un couple de tension (22) agissant au moins proportionnellement autour de l'axe de pivotement (10), le dispositif de tension présentant au moins un appareil d'ajustement (30) configuré pour un ajustement du couple de tension (22), qui est compris par au moins l'un des éléments pivotants (4, 14) et qui est configuré pour le positionnement variable de l'élément de rappel (20) sur l'élément pivotant (4, 14), **caractérisé en ce que** l'appareil d'ajustement (30) présente une pluralité d'auxiliaires de positionnement (34) espacés les uns des autres dans une direction d'ajustement (32) pour le positionnement de l'élément de rappel (20), au moins un auxiliaire de positionnement (34) de l'appareil d'ajustement (30) du premier et/ou du deuxième élément pivotant (4, 14) étant plus éloigné de l'axe de pivotement (10) que le premier ou le deuxième axe de rotation de tension (8, 18).

2. Dispositif de tension selon l'une quelconque des revendications précédentes, **caractérisé en ce que** l'appareil d'ajustement (30) présente au moins un auxiliaire de positionnement (34) qui est monté de manière déplaçable au moins proportionnellement dans la direction d'ajustement (32) par rapport au premier ou au deuxième élément pivotant (4, 14).

3. Dispositif de tension selon la revendication 2, **caractérisé en ce que** l'appareil d'ajustement (30) comprend au moins un élément de réglage (36) qui présente une section filetée et qui est configuré au moins proportionnellement sous forme rotative par rapport au premier ou au deuxième élément pivotant (4, 14).

4. Dispositif de tension selon l'une quelconque des revendications précédentes, **caractérisé en ce qu'**au moins un auxiliaire de positionnement (34) de l'appareil d'ajustement (30) du premier élément pivotant (4) ou du deuxième élément pivotant (14) a, au moins en fonctionnement, une distance plus courte par rapport au deuxième ou au premier axe de rotation de tension (8, 18) que le premier ou le deuxième axe de rotation de tension (18, 8).

5. Dispositif de tension selon l'une quelconque des revendications précédentes, **caractérisé en ce que** la direction d'ajustement (32) est orientée au moins proportionnellement tangentiellement et/ou radialement par rapport à l'axe de pivotement (10), notamment pivotée d'au plus 30°, de préférence d'au plus 10°, par rapport à une radiale coupant au moins un auxiliaire de positionnement (34) ou par rapport à une tangentielle dont le rayon correspond à une distance entre l'axe de pivotement (10) et l'auxiliaire de positionnement (34).

6. Dispositif de tension selon l'une quelconque des revendications précédentes, **caractérisé en ce que** le premier et/ou le deuxième élément pivotant (4, 14) ont une première branche d'élément pivotant (5, 15) qui s'étend entre l'axe de pivotement (10) et le premier ou le deuxième axe de rotation de tension (8, 18), et une deuxième branche d'élément pivotant (7, 17) qui s'étend à partir du premier ou du deuxième axe de rotation de tension (8, 18) en s'éloignant de l'axe de pivotement (10), la première branche d'élément pivotant (5, 15) étant configurée de manière à s'étendre en formant un angle par rapport à la deuxième branche d'élément pivotant (7, 17).

7. Dispositif de tension selon l'une quelconque des revendications précédentes, **caractérisé par** un élément de cadre (50) sur lequel le premier élément pivotant (4) et le deuxième élément pivotant (14) sont agencés de manière mobile en pivotement, notamment chacun autour de l'axe de pivotement (10).

8. Dispositif de tension selon la revendication 7, **caractérisé en ce que** l'élément de cadre (50), considéré dans une direction de circulation (62) de la courroie (64) à tendre ou de la chaîne à tendre, est configuré au moins par sections essentiellement en forme de U.

9. Dispositif de tension selon la revendication 7 ou 8, **caractérisé en ce que** l'élément de cadre (50) comprend deux parties latérales d'élément de cadre (52) s'étendant à plat orthogonalement à l'axe de pivotement (10), qui sont reliées notamment par une partie centrale (54) s'étendant parallèlement à l'axe de pivotement (10).

10. Dispositif de tension selon l'une quelconque des revendications précédentes, **caractérisé par** au moins deux premiers et/ou au moins deux deuxièmes éléments pivotants (4, 14) qui, considérés dans la direction de circulation (62), sont agencés chacun d'un côté du premier ou du deuxième élément de tension (6, 16).

11. Transmission (60) comprenant au moins deux éléments de renvoi (68) chacun montés de manière rotative autour d'un axe de rotation de renvoi (66) pour le renvoi d'au moins une courroie (64) ou d'une chaîne et comprenant un dispositif de tension (2) selon l'une quelconque des revendications précédentes, l'axe de pivotement (10) s'étendant par sections entre les éléments de renvoi (68), notamment dans un plan de renvoi (70) défini par les axes de rotation de renvoi (66).

12. Transmission selon la revendication 11, **caractérisée en ce que** les axes de pivotement (10) sont agencés de manière excentrée entre les éléments de renvoi (68) et/ou entre les axes de rotation de renvoi (66).

13. Machine de récolte de plantes sarclées comprenant un dispositif de tension (2) selon l'une quelconque des revendications 1 à 10, comprenant notamment une transmission (60) selon la revendication 11 ou 12.
